# EUROPEAN PATENT APPLICATION

(11) **EP 4 130 705 A1**
(43) Date of publication of application: **08.02.2023**
(21) Application number: 21780815.3
(22) Date of filing: 25.03.2021
(51) Int. Cl.: G01M 99/00, H01M 10/44, H01M 10/48, G01N 23/02, G01N 23/04, G01N 23/20, G01M 17/007

(54) **DYNAMIC STATE OBSERVATION SYSTEM**

(30) Priority: 01.04.2020 JP 2020065559; 24.09.2020 JP 2020159296
(71) Applicant: Nissan Arc, Ltd., Yokosuka-shi, Kanagawa 237-0061 (JP); HORIBA, Ltd., Kyoto-shi, Kyoto 601-8510 (JP)
(72) Inventor: MATSUMOTO, Takashi, Yokosuka-shi Kanagawa 237-0061 (JP); IMAI, Hideto, Yokosuka-shi Kanagawa 237-0061 (JP); MATSUMOTO, Masashi, Yokosuka-shi Kanagawa 237-0061 (JP); BALIYAN, Ankur, Yokosuka-shi Kanagawa 237-0061 (JP); HANAKI, Yasunari, Kyoto-shi, Kyoto 601-8510 (JP); IWAO, Keijiro, Kyoto-shi, Kyoto 601-8510 (JP); HIROSE, Jun, Kyoto-shi, Kyoto 601-8510 (JP); HATAKEYAMA, Hiroshi, Kyoto-shi, Kyoto 601-8510 (JP)
(74) Representative: Müller Hoffmann & Partner
(86) International application number: PCT/JP2021/012679
(87) International publication number: WO 2021/200586

(57) **Abstract**

The present invention makes it possible to grasp a correlation with an environment in which an object is actually applied and other components to be combined with the object even if there are various restrictions on the object to be observed in a large observation site, and includes: a large observation device that observes the object using a quantum beam; a reproduction device that is installed in the large observation device and reproduces an input to the object in a state where the object can be observed by the large observation device; a dynamic state observation device that observes a dynamic state of a functional object functioning by a combination of a plurality of elements; a first information acquisition unit that functionally decomposes the functional object up to an element corresponding to the object and acquires first information that is input information to the element corresponding to the object; and a transmission unit that transmits the first information to the reproduction device, in which the reproduction device reproduces the input to the object on the basis of the first information.

## Description

### Technical Field

The present invention relates to a dynamic state observation system using a large observation device that observes an object using radiation or synchrotron radiation.

### Background Art

Conventionally, Patent Literature 1 is known as a technique for performing elemental analysis and the like. This publication discloses a device that emits laser light collected from a plurality of pulse laser devices to generate plasma, and observes an object using synchrotron radiation from the plasma. Hereinafter, a site where such a large observation device is installed will be referred to as a large observation site. In the large observation site, by analyzing observation results of the object online, a place where a sample to be measured is handled and an analysis chamber are completely isolated, and a risk associated with measurement is eliminated.

### Citation List

### Patent Literature

Patent Literature 1: JP 2000-310596 A

### Summary of Invention

### Technical Problem

The large observation site using a quantum beam such as radiation or synchrotron radiation needs to satisfy a large number of requirements including safety, and cannot be installed in a general research facility that does not use a quantum beam. In addition, the large observation site is expected to nondestructively observe a dynamic state (for example, movement of atoms and molecules) of an object that has been conventionally difficult to observe, but there is a limitation on a size of the object that can be brought into the large observation site, and it has been difficult to grasp a correlation between observation information of the dynamic state obtained when the object is observed and an environment in which the object is actually applied, and other components that function in combination with the object.

An object of the present invention is to provide a dynamic state observation system capable of grasping a correlation with an environment in which the object is actually applied and other components to be combined with the object even if there are various restrictions on the object to be observed in the large observation site.

### Solution to Problem

A dynamic state observation system according to the present invention includes:
a large observation device that observes an object using a quantum beam;
a reproduction device that is installed in the large observation device and reproduces an input to the object in a state where the object can be observed by the large observation device;
a dynamic state observation device that observes a dynamic state of a functional object functioning by a combination of a plurality of elements;
a first information acquisition unit that functionally decomposes the functional object up to an element corresponding to the object and acquires first information that is input information to the element corresponding to the object; and
a transmission unit that transmits the first information to the reproduction device, in which
the reproduction device reproduces the input to the object on the basis of the first information.

### Advantageous Effects of Invention

Therefore, even if there are various restrictions on the object to be observed in the large observation device, it is possible to acquire the first information in a state where the correlation with the environment in which the object is actually applied and other components to be combined with the object is maintained, and observe the dynamic state while reproducing the input to the object by the reproduction device on the basis of the first information, and it is possible to grasp the correlation between the object and other components.

### Brief Description of Drawings

FIG. 1 is a system diagram illustrating a dynamic state observation system according to a first embodiment.
FIG. 2 is a schematic diagram illustrating data associated with time-series data stored in database of the first embodiment.
FIG. 3 is a system diagram illustrating a dynamic state observation system according to a second embodiment.
FIG. 4 is a system diagram illustrating a dynamic state observation system according to a third embodiment.

### Reference Signs List

- 1: hybrid vehicle
- 2: chassis dynamometer
- 5: large synchrotron radiation facility
- 6: reproduction device
- 9: USB memory
- 14: battery module
- 14a: battery cell (site A side)
- 14b: battery cell (site B side)
- 51: beam irradiator
- 105: information acquisition unit
- 106: site A side data communication module (DTMa)
- 206: site B side data communication module (DTMb)
- 300: database
- 1060: site A side data buffer device
- 2060: site B side data buffer device
- SGa: site A side environmental sensor
- SGb: site B side environmental sensor

### Description of Embodiments

### [First embodiment]

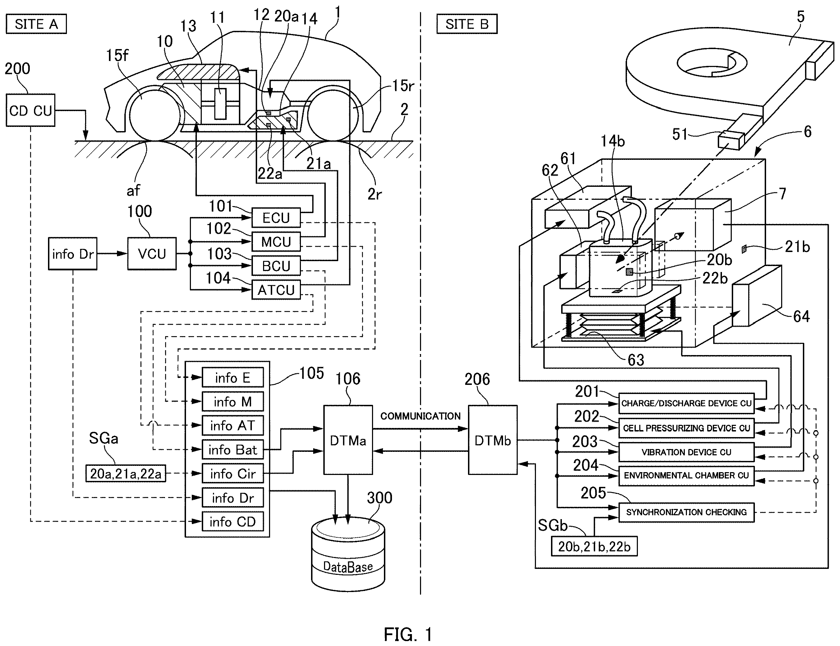

FIG. 1 is a system diagram illustrating a dynamic state observation system according to a first embodiment. In the first embodiment, as a specific example, an example in which a state inside a battery mounted on a hybrid vehicle 1 is observed by a large observation device will be described. In the first embodiment, a facility where the hybrid vehicle 1 runs on a chassis dynamometer 2 is defined as a site A, and a large observation site where a battery cell 14b of the same standard as that of a battery cell 14a in a battery module 14 mounted on the hybrid vehicle 1 is observed non-destructively using X-rays is defined as a site B.

### (Site A)

The site A is, for example, a research facility constructed in a company, and in the first embodiment, a facility capable of simulating a running test of a vehicle is provided. In addition, the site A includes an information acquisition unit 105, a site A side data communication module 106, and a database 300. Hereinafter, each component will be described in detail.

The hybrid vehicle 1 includes an engine 10 that is an internal combustion engine, a motor generator 11 that charges and discharges electric power with the battery module 14 by regeneration and powering, an automatic transmission 12, the battery module 14 that stores electric power, and an inverter 13 that supplies and collects electric power between the motor generator 11 and the battery module 14. The battery module 14 is incorporated in an aluminum housing in a state where a plurality of battery cells 14a are connected in series or in parallel, and stores a predetermined electric power. The battery module 14 includes a pressure sensor 20a that detects a pressure acting on one of the plurality of battery cells 14a incorporated in the battery module 14, a temperature sensor 21a that detects an ambient temperature (particularly, near the battery cell 14a) in the battery module 14, and a vibration sensor 22a that detects a vibration state in the battery module 14. Three sensors 20a, 21a, and 22a provided in the site A are also collectively referred to as a site A side environmental sensor SGa that acquires an environmental state. A driving force output from the engine 10 and/or the motor generator 11 is transmitted to a drive wheel 15r via the automatic transmission 12. In the first embodiment, a rear wheel drive type hybrid vehicle 1 is exemplified, but it may be a front wheel drive type or a four-wheel drive type, or may be an electric vehicle or a vehicle that runs only with an engine, and is not particularly limited.

The hybrid vehicle 1 is installed on the chassis dynamometer 2 installed in the site A. The chassis dynamometer 2 includes a front roller 2f on which a driven wheel 15f is placed and a rear roller 2r on which the drive wheel 15r is placed. The chassis dynamometer 2 includes a chassis dynamometer control unit 200 (hereinafter, CDCU 200) that controls drive states of the front roller 2f and the rear roller 2r of the chassis dynamometer 2. For example, when a predetermined running load resistance is set for the CDCU 200, the running load resistance is generated in the rear roller 2r. When the drive wheel 15r is driven in this state, a running state corresponding to the predetermined running load resistance is reproduced. In accordance with a rotation state of the rear roller 2r at this time, the front roller 2f is rotationally driven, and the driven wheel 15f rotates in the same manner as when running on a road surface.

The hybrid vehicle 1 includes a vehicle control unit 100 (VCU 100) that integrally controls a running state of the vehicle, an engine control unit 101 (hereinafter, ECU 101) that controls a driving state of the engine 10 on the basis of a command from the VCU 100, a motor control unit 102 (hereinafter, MCU 102) that controls a driving state of the motor generator 11 on the basis of a command from the VCU 100, a battery control unit 103 (hereinafter, BCU 103) that controls a power state in the battery module 14 on the basis of a command from the VCU 100, and an automatic transmission control unit 104 (hereinafter, ATCU 104) that controls a transmission ratio of the automatic transmission 12 on the basis of a command from the VCU 100.

In addition, the hybrid vehicle 1 has an input unit input capable of inputting driver operation information (accelerator pedal opening degree, brake pedal stepping force, steering operation amount, shift lever operation information, and the like: hereinafter, infoDR) to the VCU 100. Regarding these, infoDR may be transmitted when a driver actually gets into the hybrid vehicle 1 and operates it, or infoDR may be transmitted from an external input terminal, another automatic driving control unit, or the like, and these are not particularly limited.

The information acquisition unit 105 acquires infoE that is information related to the engine 10 (various information that can be collected, such as engine torque Te, engine rotational speed Ne, gas composition of exhaust catalyst, gas flow rate, exhaust temperature, and air-fuel ratio), infoM that is information related to the motor generator 11 (various information that can be collected, such as motor torque Tm, motor output, and motor rotational speed Nm), infoAT that is information related to the automatic transmission 12 (turbine rotational speed Nt, gear ratio Gr, oil temperature, output shaft rotational speed, and the like), infoBatA that is information related to the battery module 14 (current A, voltage V, state of charge (SOC), state of deterioration (SOH), open circuit voltage (OCV), outputtable power (SOP), and the like), infoCirA that is information related to environment of the battery module 14 (ambient temperature °C, pressure Pa, vibration Hz, and the like detected by the environmental sensor SGa), infoDR that is operation information of the driver, and infoCD that is information related to the CDCU 200 (running load, roller rotational speed N, vehicle speed vsp, and the like).

The database 300 is installed in the site A and stores data acquired by the information acquisition unit 105 in chronological order. Various analysis programs are prepared in the database 300, and a causal relationship of various types of information can be grasped on the basis of finally obtained information. Note that the database 300 may be installed at another site on a network, and an installation location of the database 300 is not particularly limited.

The site A side data communication module 106 (hereinafter, DTMa 106) acquires infoBatA and infoCirA among information acquired by the information acquisition unit 105, and transmits them to the site B via a high-speed communication line such as the Internet or high-speed wireless communication. The reason why infoBatA and infoCirA are selected will be described later. In addition, infoP, infoBatB, and infoSyc received from a site B side data communication module 206 to be described later are stored in the database 300.

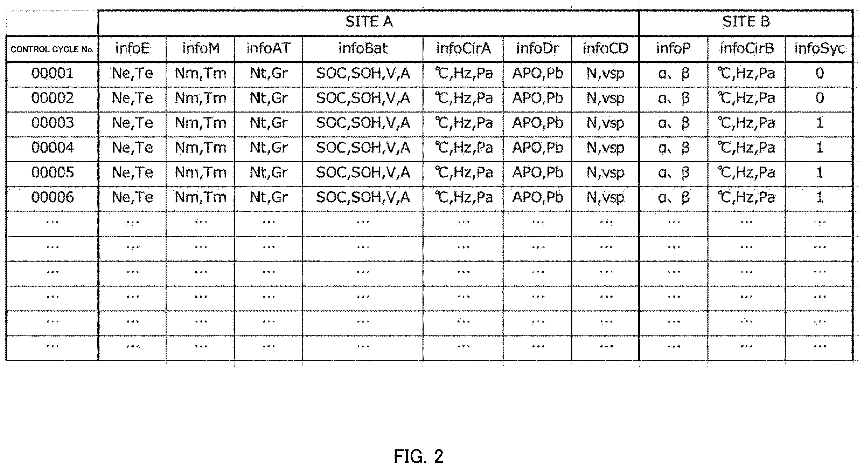

FIG. 2 is a schematic diagram illustrating data associated with time-series data stored in database of the first embodiment. In the first embodiment, various types of information associated with control cycle No. are stored, and information of the site A and information of the site B can be handled as one database.

### (Site B)

The site B includes a large synchrotron radiation facility 5 capable of various measurements using a quantum beam such as synchrotron radiation, a reproduction device 6, and the site B side data communication module 206 (hereinafter, DTMb 206). The large synchrotron radiation facility 5 accelerates electrons to a speed substantially equal to that of light by a ring-type accelerator, and enables non-destructive observation at a nanometer level using a strong electromagnetic wave (X-ray) generated when a traveling direction of the electron is bent by a magnetic force. The large synchrotron radiation facility 5 is very large and is constructed under strict installation requirements because it utilizes highly hazardous electromagnetic waves. In other words, the site B is a facility that can be constructed only in an extremely limited area or the like.

The reproduction device 6 is a device that reproduces the same environment and the same charge/discharge state as an environment in which the battery cell 14a is placed in the site A with respect to the battery cell 14b of the same standard as the battery cell 14a incorporated in the battery module 14. An environmental chamber 60 is a container that can be set to a desired environment (temperature, humidity, atmospheric pressure, and the like) in a state where the battery cell 14b is disposed therein. A charge/discharge device 61 performs desired charge/discharge on the battery cell 14b installed in the environmental chamber 60. A cell pressurizing device 62 pressurizes the battery cell 14b with a desired pressing force. A vibration device 63 applies desired vibration to the battery cell 14b. Note that a frequency upper limit value that can be reproduced by the vibration device 63 is set according to a cycle (hereinafter, a spectrum acquisition cycle) in which a spectrum such as absorption, diffraction, or scattering of X-rays is acquired. The frequency upper limit value is set to a higher frequency as the spectrum acquisition cycle is shorter. An environmental chamber adjustment device 64 adjusts an ambient temperature, humidity, atmospheric pressure, and the like in the environmental chamber 60 to desired values.

The reproduction device 6 incorporates a pressure sensor 20b that detects a pressure acting on the battery cell 14b, a temperature sensor 21b that detects the ambient temperature in the environmental chamber 60, and a vibration sensor 22b that detects a vibration state of the battery cell 14b. Three sensors 20b, 21b, and 22b provided in the site B are also collectively referred to as a site B side environmental sensor SGb that acquires an environmental state.

A beam irradiator 51 outputs X-ray (synchrotron radiation) output from the large synchrotron radiation facility 5 toward a target region of the battery cell 14b installed in the environmental chamber 60.

A detection device 7 detects X-rays when emitted X-rays are transmitted, diffracted, or scattered through the battery cell 14b, and observes dynamic states of atoms and molecules at a nanometer level. As an observation example in the battery cell 14b, for example, a state change (SEI film forming process, film thickness change process, and the like) of solid electrolyte interphase (SEI) formed on a surface of a negative electrode is observed. Image data (including moving images) based on these observations, and infoP which is information such as SEI film thickness are transmitted to the DTMb 206.

The DTMb 206 transmits infoBatA and infoCirA transmitted from the DTMa 106 to each control unit, and transmits them to a synchronization checking unit 205.

The charge/discharge device 61 is controlled to reproduce a charge/discharge state at the site A with respect to the battery cell 14b on the basis of infoBatA transmitted from the DTMb 206 to a charge/discharge control unit 201. The cell pressurizing device 62 is controlled to reproduce a pressure state at the site A with respect to the battery cell 14b on the basis of infoCirA transmitted from the DTMb 206 to a cell pressurizing device control unit 202. The vibration device 63 is controlled to reproduce a vibration state at the site A with respect to the battery cell 14b on the basis of infoCirA transmitted from the DTMb 206 to a vibration device control unit 203. The environmental chamber adjustment device 64 is controlled to reproduce the ambient temperature and the like at the site A on the basis of infoCirA transmitted from the DTMb 206 to an environmental chamber control unit 204.

The synchronization checking unit 205 checks whether infoCirA is synchronized with infoCirB that is information detected by the site B side environmental sensor SGb, and infoBatA is synchronized with infoBatB that is the charge/discharge state on the site B side, and if they are synchronized with each other, infoSyc is output as 1, and if synchronization is not maintained, infoSyc is output as 0. Each control unit continues control when received infoSyc is 1, and temporarily ends the control when the received infoSyc is 0, and performs synchronization again after resetting. Note that the synchronization means that infoBatA acquired at the site A and infoBatB acquired at the site B transmitted from the DTMa 106 match in time series, and infoCirA acquired at the site A and infoCirB acquired at the site B match. Note that as long as the order is the same in the time series, the synchronization is not necessarily required to be performed at the same time interval, and only the order of the time series may be synchronized at different time intervals according to detection resolution of the detection device 7.

The DTMb 206 acquires infoP, infoBatB, and infoSyc detected by the detection device 7 and transmits them to the DTMa 106.

### (Reason why infoBatA and infoCirA were selected)

As described above, since the site B of the dynamic state observation system in the first embodiment uses the quantum beam such as radiation or synchrotron radiation, the site B is often constructed at a remote place, and a measurement environment is in a relatively small laboratory. Therefore, it is not possible to bring a large chassis dynamometer or the like including the vehicle itself as it is. Conventionally, an object that can be brought into the site B has been observed alone. However, when the object (hereinafter, referred to as a measurement object) is one component of a functional object that functions by a combination of a plurality of elements, it has been difficult to grasp a correlation between the functional object to be actually applied and the measurement object. In particular, the functional object often exhibits a function on the basis of an action in a dynamic state, and it has been difficult to grasp a correlation based on the action in observation in a static state. In addition, even if a reproduction experiment of the dynamic state such as various running tests is performed and a measurement object obtained as a result is brought into the site B, it has been difficult to understand what process the measurement object has undergone, and in addition, it has not been possible to grasp what interaction has occurred between the measurement object and other components, and it has been extremely difficult to understand a phenomenon in the dynamic state.

Therefore, in the first embodiment, performance of the reproduction device 6 that can be installed in the site B was determined, and then a specification of the measurement object was determined on the basis of a specification of the reproduction device. When the functional object is observed at the site A, the functional object is functionally decomposed to the measurement object, input information and environmental information to the measurement object are acquired at the site A, and the input information is transmitted to the reproduction device 6 at the site B. That is, the site A and the site B are operated as one system in a pseudo manner through a communication line. Thus, the dynamic state of the functional object is reproduced at the site A, and at the same time, the dynamic state of the measurement object is reproduced and observed in the reproduction device 6 of the site B on the basis of the input information of the measurement object generated in the dynamic state. Thus, the correlation between the functional object and the measurement object in the dynamic state in which the functional object exhibits the function can be grasped.

In the first embodiment, the hybrid vehicle 1 is employed as the functional object. The hybrid vehicle 1 includes a plurality of components (the engine 10 and the motor generator 11 each have one function, and the functions are combined to function as one system), and the reproduction device 6 of the site B has a specification capable of reproducing the environmental state such as the charge/discharge state, a pressurized state, the vibration state, and the ambient temperature of the battery cell 14b. Then, the hybrid vehicle 1 was functionally disassembled to the battery module 14, and further the battery module 14 was functionally disassembled to the battery cell 14a, so that the battery cell 14b was selected as the measurement object.

For example, in the hybrid vehicle 1, when an output torque from the motor generator 11 is excessive under a certain running condition, a load is applied to the battery module 14, and there is a concern of structural collapse or excessive film formation on the surface of the negative electrode in the battery cell. Therefore, there is a case where a limit value is set to the output torque of the motor generator 11 on the hybrid vehicle 1 side. Such a running state is reproduced at the site A, and information acquired at the site A is transmitted to the site B via the high-speed communication line. In the site B, an inside of the battery cell 14b is observed on the basis of the received information. Thus, it is possible to check whether structural collapse or excessive film formation on the surface of the negative electrode actually occurs in the running state that is concerned. In addition, if the structural collapse, the excessive film formation, and the like on the surface of the negative electrode do not occur in actual observation, it is also possible to change the limit value to a larger value at the site A and check the output torque that actually causes the structural collapse, the excessive film formation, and the like on the surface of the negative electrode. Thus, there is a use method of improving power performance of the hybrid vehicle 1.

In addition, the site A and the site B are connected via the high-speed communication line, and analysis can be performed in real time with almost no time lag. Depending on performance of the large synchrotron radiation facility 5 at the site B, the spectrum such as absorption, diffraction, or scattering of X-rays can be acquired at high speed, so that at the site A, it is also possible to control a motor generator output torque and an engine output torque by feedback control on the basis of infoP obtained at the site B. Thus, it is also possible to optimize control gain in macro vehicle control on the basis of a micro dynamic state in the battery cell.

Here, in the database 300, various data during running collected in the site A and data of the battery cell at the time of reproduction collected in the site B can be grasped as one data. Therefore, for example, it is predicted that a causal relationship with a parameter that is not initially assumed can be grasped from a relationship with other information when the above-described running state is reproduced, and it is possible to find a restriction or the like by a new parameter.

As described above, in the first embodiment, the following functions and effects are obtained.
(1) The dynamic state observation system includes:
   the site B having a large synchrotron radiation facility 5 that observes the battery cell 14b that is the object (large observation device that observes the object using the quantum beam);
   the reproduction device 6 that is installed in the site B and reproduces an input to the battery cell 14b in a state where the battery cell 14b can be observed by the large synchrotron radiation facility 5;
   the chassis dynamometer 2 (dynamic state observation device) that observes the dynamic state of the hybrid vehicle 1 (functional object functioning by the combination of the plurality of elements);
   the information acquisition unit 105 (first information acquisition unit) that functionally decomposes the hybrid vehicle 1 to the element corresponding to the battery cell 14b and acquires infoBatA (first information) that is input information to the battery cell 14a (element corresponding to the object); and
   the DTMa 106 (transmission unit) that transmits infoBatA to the reproduction device 6, and
   the reproduction device 6 reproduces the input to the battery cell 14b on the basis of infoBatA.
   Therefore, even if there are various restrictions on the object to be observed in the site B, it is possible to acquire infoBatA in a state where the correlation with the environment in which the object is actually applied and other components to be combined with the object is maintained, and observe the dynamic state while reproducing the input to the battery cell 14b by the reproduction device 6, and it is possible to grasp the correlation between the object and other components.
(2) The site A and the site B are connected by a high-speed communication unit such as an Internet line or the high-speed wireless communication. Therefore, the analysis can be performed in real time, and feedback control of a macro state of the site A and a micro state of the site B can be realized.
(3) The dynamic state observation system includes the site A side environmental sensor SGa (second information acquisition unit) that acquires infoCirA (second information) that is external environment information of the battery cell 14a, and
   the reproduction device 6 reproduces an external environment of the battery cell 14b on the basis of infoCirA.
   Therefore, it is possible to grasp not only a power state of the battery cell 14b but also a causal relationship with the environment in which the battery cell 14a is placed, and for example, it is possible to contribute to analysis of a causal relationship, that has not been known so far, between the vibration state or the temperature and an electrode state.
(4) The dynamic state observation system includes the database 300 that associates and stores infoP (first observation data) obtained by observing the battery cell 14a at the site B and infoE, infoM, infoAT, infoBatA, infoCirA, infoDR, and infoCD (second observation data) obtained by observing the dynamic state of the hybrid vehicle 1 at the site A. Therefore, various analyses can be realized by associating and collectively managing micro information and macro information in the dynamic state.
(5) A causal relationship between infoP and infoE, infoM, infoAT, infoBatA, infoCirA, infoDR, and infoCD is extracted on the basis of information of the database 300. Thus, by grasping a causal relationship between information indicating a macro state and information indicating a micro state, a state on the macro side can be more deeply understood on the basis of a state on the micro side.
(6) The dynamic state of the hybrid vehicle 1 is changed on the basis of infoP obtained by observing the battery cell 14b at the site B. For example, when a relationship between acceleration of the vehicle and change of an active material of a battery electrode is grasped, an output torque limit value and the like in driving force control of the hybrid vehicle 1 can be appropriately set from a micro viewpoint.

### [Second embodiment]

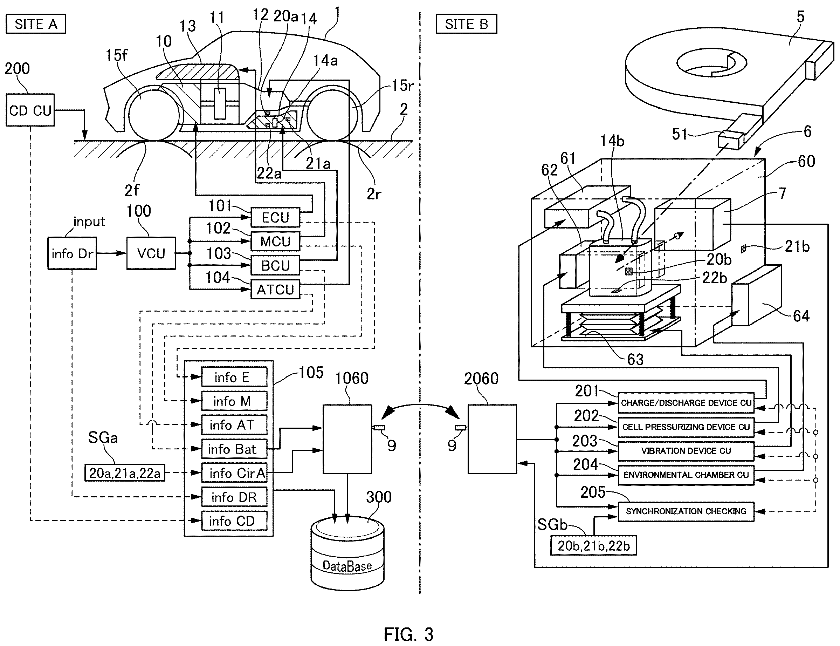

Next, a second embodiment will be described. Since a basic configuration of the second embodiment is the same as that of the first embodiment, only different points will be described. FIG. 3 is a system diagram illustrating the dynamic state observation system according to the second embodiment. In the first embodiment, the site A and the site B are connected by the high-speed communication line, and data is transmitted and received in real time. In contrast, the second embodiment is different in that a site A side data buffer device 1060 and a site B side data buffer device 2060 are provided instead of the site A side data communication module 106 and the site B side data communication module 206.

The site A side data buffer device 1060 stores infoBatA and infoCirA associated with the time-series data, and is configured to be able to output infoBatA and infoCirA associated with the time-series data to a USB memory 9 that is a portable storage medium. Note that the portable storage medium is not limited to the USB memory 9, but may be a CD-ROM, an SD card, or the like, and is not particularly limited.

Similarly, the site B side data buffer device 2060 is configured to be able to read infoBatA and infoCirA associated with the time-series data from the USB memory 9 brought to the site B. Then, the reproduction device 6 is operated on the basis of the read data, and the observed infoP can be output again in association with the time-series data in the USB memory 9.

First, various data under a predetermined running condition is acquired at the site A, and then infoBatA and infoCirA associated with the time-series data are output from the site A side data buffer device 1060 to the USB memory 9. Subsequently, the USB memory 9 is brought to the site B, and the data in the USB memory 9 is read into the site B side data buffer device 2060. Then, in the site B, the reproduction device 6 is operated on the basis of the read data to acquire infoP. Subsequently, data including infoP associated with the time-series data is output to the USB memory 9, and stored in the USB memory 9. Subsequently, the USB memory 9 is brought back to the site A, information acquired at the site B is taken into the site A side data buffer device 1060, and infoP is stored in the database 300 in association with the time-series data.

By buffering the data in this manner, data acquisition timing at the site A and data acquisition timing at the site B can be performed at different arbitrary timings. Therefore, for example, even in a case where users of the site B are crowded and the site B cannot be used at the data acquisition timing at the site A, it is possible to efficiently use the site B by acquiring the data at the site A in advance.

### [Third embodiment]

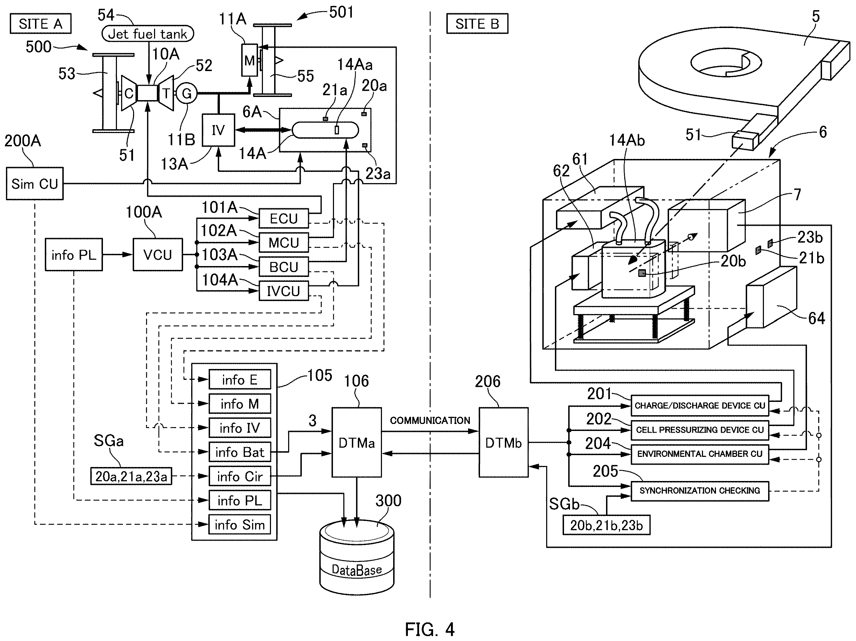

Next, a third embodiment will be described. Since a basic configuration of the second embodiment is the same as that of the first embodiment, only different points will be described. FIG. 4 is a system diagram illustrating the dynamic state observation system according to the third embodiment. In the first embodiment, a system for observing the dynamic state of the hybrid vehicle is used. In contrast, the third embodiment is different from the first embodiment in that a system for observing the dynamic state of a hybrid aircraft is used.

In recent years, from the viewpoint of reducing an emission amount of carbon dioxide, studies have been made to use an electric motor in addition to a jet engine as propulsion of an aircraft. When a battery is mounted on the aircraft, since conditions of temperature and atmospheric pressure during flight are more severe than those on the ground, it is urgently necessary to ensure performance and safety of the battery during flight or after repeated flight. However, the hybrid aircraft is very large compared to the hybrid vehicle, and it is not possible to reproduce a flight state indoors, so that it is not possible to bring and test the hybrid aircraft in the site A like the hybrid vehicle.

There, functional decomposition (hereinafter, referred to as primary functional decomposition) is performed from the hybrid aircraft up to a component that can be brought into the site A and can reproduce the dynamic state of the element functioning in the flight state. Then, in the site A, a facility capable of reproducing the dynamic state of a primarily functionally decomposed component (hereinafter, referred to as a primary component) in the flight state was provided. Subsequently, functional decomposition (hereinafter, referred to as secondary functional decomposition) is performed up to a component that can be brought into the site B and can reproduce the dynamic state of the element functioning as the primary component. Then, in the site B, a facility capable of reproducing the dynamic state of a secondarily functionally decomposed component (hereinafter, referred to as a secondary component) in the flight state was provided. Since secondary components in the third embodiment are the battery cells (including 14Aa and 14Ab), the primary component is determined based on the battery cells.

### (Site A)

An observation target of the site B is the battery cell 14Aa, and a plurality of battery cells 14Aa constitutes a battery 14A. Therefore, as primary components electrically and mechanically connected to the battery 14A, a main engine 500 provided on a main wing portion, a subsidiary engine 501 provided behind a body portion, an inverter 13A, and the battery 14Awere selected.

The main engine 500 is an engine that generates the propulsion by the jet engine, and includes a combustion chamber 10A, a compressor 51, a turbine 52, a propulsion fan 53 connected to these rotary elements and generates the propulsion of the aircraft, a fuel tank 54 that supplies jet fuel to the combustion chamber 10A, and a generator 11B connected to the turbine 52. The generator 11B is electrically connected to the battery 14A.

The subsidiary engine 501 is an engine that generates the propulsion by electric power, and includes an electric motor 11A and a second propulsion fan 55 connected to the electric motor 11A. The electric motor 11A is electrically connected to the battery 14A.

The inverter 13A is connected to the battery module 14A, can be charged with electric power generated by the generator 11B, and can supply necessary electric power to the electric motor 11A.

The battery module 14A is incorporated in the aluminum housing in a state where the plurality of battery cells 14Aa are connected in series or in parallel, and stores a predetermined electric power. The battery module 14A is installed in a primary reproduction device 6A that reproduces an environment of the flight state. The primary reproduction device 6A is configured to be able to arbitrarily reproduce an internal temperature, humidity, and atmospheric pressure.

The primary reproduction device 6A incorporates the pressure sensor 20a that detects the pressure acting on one of the plurality of battery cells 14Aa incorporated in the battery module 14A, the temperature sensor 21a that detects the ambient temperature (particularly, near the battery cell 14Aa) in the battery module 14, and an atmospheric pressure sensor 23a that detects the atmospheric pressure in the battery module 14A. Three sensors 20a, 21a, and 23a provided in the site A are also collectively referred to as the site A side environmental sensor SGa that acquires the environmental state. The hybrid aircraft flies by the propulsion output from the main engine 500 and/or the subsidiary engine 501. In the third embodiment, a series parallel partial hybrid aircraft is exemplified as an aircraft including a battery, but a parallel hybrid aircraft or a series hybrid aircraft may be used. In addition, as the aircraft including the battery, a system that flies only with electric power, or a system that uses only the jet engine as the propulsion and supplies electric power from the battery to auxiliary equipment such as landing gear and in a cabin may be used, and the system is not particularly limited.

The primary component has a simulator control unit 200A (hereinafter, SimCU 200A). For example, when a predetermined flight state is set for the SimCU 200A, an inside of the primary reproduction device 6A is set to a temperature or an atmospheric pressure corresponding to the flight state.

The primary element includes a vehicle control unit 100A (hereinafter, VCU 100A) that integrally controls the flight state, an engine control unit 101A (hereinafter, ECU 101A) that controls a driving state of the main engine 500 on the basis of a command from the VCU 100A, a motor control unit 102A (hereinafter, MCU 102A) that controls a driving state of the electric motor 11A on the basis of the command from the VCU 100A, a battery control unit 103A (hereinafter, BCU 103A) that controls the power state in the battery module 14 on the basis of the command from the VCU 100A, and an inverter control unit 104A (hereinafter, IVCU 104A) that controls the inverter 13A (including a power generation state of the generator 11B) on the basis of the command from the VCU 100A.

In addition, the primary component includes the input unit input capable of inputting pilot operation information (hereinafter, infoPL) to the VCU 100A. Regarding these, flight information infoPL when actually flying in the hybrid aircraft may be transmitted, or infoPL may be transmitted from an external input terminal, another control unit, or the like, and these are not particularly limited.

The information acquisition unit 105 acquires infoE that is information related to the main engine 500, infoM that is information related to the subsidiary engine 501 (various information that can be collected, such as motor torque Tm, motor output, and motor rotational speed Nm), infoIV that is information related to the inverter 13A, infoBatA that is information related to the battery module 14A (current A, voltage V, state of charge (SOC), state of deterioration (SOH), open circuit voltage (OCV), outputtable power (SOP), and the like), infoCirA that is information related to environment of the battery module 14A (ambient temperature °C, pressure Pa, atmospheric pressure hPa, and the like detected by the environmental sensor SGa), infoPL that is the pilot operation information, and infoSim that is information related to the SimCU 200A.

The database 300 is installed in the site A and stores data acquired by the information acquisition unit 105 in chronological order. Various analysis programs are prepared in the database 300, and a causal relationship of various types of information can be grasped on the basis of finally obtained information.

The site A side data communication module 106 (hereinafter, DTMa 106) acquires infoBatA and infoCirA among information acquired by the information acquisition unit 105, and transmits them to the site B via a high-speed communication line such as the Internet or high-speed wireless communication. In addition, infoP, infoBatB, and infoSyc received from a site B side data communication module 206 to be described later are stored in the database 300.

### (Site B)

The site B includes the large synchrotron radiation facility 5 capable of various measurements using the quantum beam, the reproduction device 6, and the site B side data communication module 206 (hereinafter, DTMb 206).

The reproduction device 6 is a device that reproduces the same environment and the same charge/discharge state as an environment in which the battery cell 14Aa is placed in the site A with respect to the battery cell 14Ab (secondary component) of the same standard as the battery cell 14Aa incorporated in the battery module 14A. An environmental chamber 60 is a container that can be set to a desired environment (temperature, humidity, atmospheric pressure, and the like) in a state where the battery cell 14Ab is disposed therein. The charge/discharge device 61 performs desired charge/discharge on the battery cell 14Ab installed in the environmental chamber 60. The cell pressurizing device 62 pressurizes the battery cell 14Ab with the desired pressing force. An environmental chamber adjustment device 64 adjusts an ambient temperature, humidity, atmospheric pressure, and the like in the environmental chamber 60 to desired values.

The reproduction device 6 incorporates the pressure sensor 20b that detects the pressure acting on the battery cell 14Ab, the temperature sensor 21b that detects the ambient temperature in the environmental chamber 60, and an atmospheric pressure sensor 23b that detects an atmospheric pressure state of the battery cell 14Ab. Three sensors 20b, 21b, and 23b provided in the site B are also collectively referred to as the site B side environmental sensor SGb that acquires the environmental state.

A beam irradiator 51 outputs X-ray (synchrotron radiation) output from the large synchrotron radiation facility 5 toward a target region of the battery cell 14Ab installed in the environmental chamber 60.

A detection device 7 detects X-rays when emitted X-rays are transmitted, diffracted, or scattered through the battery cell 14Ab, and observes dynamic states of atoms and molecules at a nanometer level. The image data (including moving images) based on these observations, and infoP which is information on structural collapse or excessive film formation on the surface of the negative electrode and a gas generation state in an electrolytic solution are transmitted to the DTMb 206.

The DTMb 206 transmits infoBatA and infoCirA transmitted from the DTMa 106 to each control unit, and transmits them to a synchronization checking unit 205.

The charge/discharge device 61 is controlled to reproduce the charge/discharge state at the site A with respect to the battery cell 14Ab on the basis of infoBatA transmitted from the DTMb 206 to the charge/discharge control unit 201. The cell pressurizing device 62 is controlled to reproduce the pressure state at the site A with respect to the battery cell 14Ab on the basis of infoCirA transmitted from the DTMb 206 to the cell pressurizing device control unit 202. The environmental chamber adjustment device 64 is controlled to reproduce the ambient temperature and the like at the site A on the basis of infoCirA transmitted from the DTMb 206 to an environmental chamber control unit 204.

The synchronization checking unit 205 checks whether infoCirA is synchronized with infoCirB that is information detected by the site B side environmental sensor SGb, and infoBatA is synchronized with infoBatB that is the charge/discharge state on the site B side, and if they are synchronized with each other, infoSyc is output as 1, and if synchronization is not maintained, infoSyc is output as 0. Each control unit continues control when received infoSyc is 1, and temporarily ends the control when the received infoSyc is 0, and performs synchronization again after resetting. Note that the synchronization means that infoBatA acquired at the site A and infoBatB acquired at the site B transmitted from the DTMa 106 match in time series, and infoCirA acquired at the site A and infoCirB acquired at the site B match. Note that as long as the order is the same in the time series, the synchronization is not necessarily required to be performed at the same time interval, and only the order of the time series may be synchronized at different time intervals according to detection resolution of the detection device 7.

The DTMb 206 acquires infoP, infoBatB, and infoSyc detected by the detection device 7 and transmits them to the DTMa 106.

An observation example in the battery cell 14Ab in the third embodiment will be described. The aircraft is assumed to fly in an environment at a lower temperature and a lower atmospheric pressure than a vehicle on the premise of running on the ground like the vehicle. In particular, when, for example, carbon dioxide gas or the like is dissolved in the electrolytic solution in the battery cell 14Ab, these gas components may be bubbled under low pressure. It is possible to observe an influence or the like of bubbles on, for example, the state change (SEI film forming process, film thickness change process, and the like) of the solid electrolyte interphase (SEI) formed on the surface of the negative electrode. This makes it possible to perform various tests contributing to improvement of battery performance and safety.

### (Other embodiments)

Although the present invention has been described above according to the first to third embodiments, the present invention can also be applied to other embodiments without departing from the scope of the present invention.

In the first and second embodiments, an example in which the hybrid vehicle 1 is selected as the functional object and the chassis dynamometer is used in the site A has been described, however, the vehicle may actually run, for example, in a test course without being limited to the chassis dynamometer, and various data obtained at that time may be transmitted to the site B by wireless communication, or various data obtained by the running test on a general road without being limited to the test course may be transmitted to the site B by wireless communication or the storage medium.

In the first and second embodiments, an example focusing on the battery cell 14b mounted on the vehicle has been described, however, a state of a thin film formed on a surface of an exhaust catalyst may be observed at the site B focusing on the exhaust catalyst of the engine without being limited to the battery. Alternatively, in a fuel cell vehicle, focusing on a fuel cell, a state of a catalyst of the fuel cell may be observed at the site B. Alternatively, focusing on a tire, an interface state between a wire frame and a rubber molecule in the tire and a dynamic state of a molecular structure during running may be observed. Basically, the system can be constructed for any place as long as the measurement object can be reproduced in the reproduction device of the site B.

In addition, not only four-wheeled vehicles but also all vehicles such as two-wheeled vehicles, railway vehicles, and the aircraft can be selected. In the first to third embodiments, a dynamic state based on a chemical reaction inside the battery is observed, but a dynamic state based on a mechanical interaction may be observed without being limited to the dynamic state in the chemical reaction. For example, in a case where the aircraft is selected, disassembling the function up to the most loaded portion of a wing, making a test flight, checking a portion hidden by a rivet of the wing non-destructively at site B, and obtaining information on the degree of fatigue can contribute to improvement of safety of the aircraft. Note that, in the case of the dynamic state based on the chemical reaction, it is difficult to temporarily stop the chemical reaction during observation, but in the case of the dynamic state based on the mechanical interaction, it is also possible to temporarily stop during observation, and thus, it is possible to realize more various observation methods.

In addition, the present invention is not limited to the functional object including a mechanical structural element as described above, and may be applied to the functional object including a construction structural element. For example, when a seismic resistance test of a building such as a house or a building is performed, an interface state of an adhesive used in the building may be observed, or a fatigue state of a bolt or a frame may be observed.

In addition, the present invention may be applied to a functional object including an electrical appliance element used for heavy electric equipment. For example, a state leading to electrical performance breakdown or a state leading to physical breakdown when a high voltage is applied to a transformer may be observed.

In the first and second embodiments, examples of the observation device using synchrotron radiation have been described, but the observation device may be an observation device using the quantum beam such as an X-ray free electron laser or a neutron synchrotron. Specific examples of observation by the detection device include X-ray transmission imaging which is a two-dimensional transmission imaging method, phase contrast imaging using a difference in refractive index depending on a substance, X-ray diffraction mapping which estimates a charge/discharge state of a positive electrode or a negative electrode in the battery from a lattice constant, neutron Bragg edge imaging using a Bragg edge (diffraction and transmission), imaging XAFS which is XAFS mapping of a transition metal, CT-XAFS which three-dimensionally acquires XAFS mapping of the transition metal, Compton scattering imaging, ptychography XAFS, and confocal XRD mapping. These are not particularly limited as long as they can be observed nondestructively using characteristics from a microscopic viewpoint such as a crystal structure, an electronic state, a particle size distribution, a local structure, and an interface structure of the measurement object. In addition, not only the image data by imaging but also spectral data may be acquired, and the molecular structure or the like may be observed from the spectral data.

Furthermore, in the embodiment, an example in which the database 300 is installed in the site A has been described, but the database may be installed in a place other than the site A, for example, on a cloud or in the site B, as long as it is in the network.

### Industrial Applicability

According to the present invention, it is possible to provide a dynamic state observation system capable of grasping a correlation with an environment in which an object is actually applied and other components to be combined with the object even if there are various restrictions on the object to be observed in a large observation site.

## Claims

1. A dynamic state observation system comprising:
a large observation device that observes an object using a quantum beam;
a reproduction device that is installed in the large observation device and reproduces an input to the object in a state where the object can be observed by the large observation device;
a dynamic state observation device that observes a dynamic state of a functional object functioning by a combination of a plurality of elements;
a first information acquisition unit that functionally decomposes the functional object up to an element corresponding to the object and acquires first information that is input information to the element corresponding to the object; and
a transmission unit that transmits the first information to the reproduction device, wherein
the reproduction device reproduces the input to the object on the basis of the first information.

2. The dynamic state observation system according to claim 1, wherein
the large observation device and the reproduction device are installed in a large observation site,
the dynamic state observation device, the first information acquisition unit, and the transmission unit are installed in a dynamic state observation site isolated from the large observation site, and
the large observation site and the dynamic state observation site are connected by a high-speed communication unit.

3. The dynamic state observation system according to claim 1, wherein
the transmission unit includes a storage unit that stores data acquired by the first information acquisition unit in a storage medium, and a reading unit that reads the data from the storage medium to the reproduction device.

4. The dynamic state observation system according to any one of claims 1 to 3, comprising
a second information acquisition unit that acquires second information that is external environment information of the element corresponding to the object, wherein
the reproduction device reproduces an external environment of the object on the basis of the second information.

5. The dynamic state observation system according to any one of claims 1 to 4, comprising
a database in which first observation data obtained by observing the object with the large observation device and second observation data obtained by observing the dynamic state of the functional object with the dynamic state observation device are associated and stored.

6. The dynamic state observation system according to claim 5, wherein
a causal relationship between the first observation data and the second observation data is extracted on the basis of information of the database.

7. The dynamic state observation system according to any one of claims 1 to 6, wherein
the dynamic state of the functional object is changed on the basis of the first observation data obtained by observing the object with the large observation device.
